# EUROPEAN PATENT SPECIFICATION

(11) **EP 2 121 820 B1**
(45) Date of publication and mention of the grant of the patent: **17.11.2010**
(21) Application number: 08727043.5
(22) Date of filing: 19.03.2008
(51) Int. Cl.: C08K 3/00, C08L 77/06, C08K 7/14, C08K 3/10, C08K 3/04, C08K 3/40

(54) **POLYAMIDE RESIN COMPOSITIONS**
POLYAMIDHARZZUSAMMENSETZUNGEN
COMPOSITIONS DE RÉSINE POLYAMIDE

(30) Priority: 19.03.2007 US 918989 P
(43) Date of publication of application: 25.11.2009
(73) Proprietor: E. I. Du Pont de Nemours and Company, Wilmington, DE 19898 (US)
(72) Inventor: NOZAKI, Masahiro, Tochigi 321-0932 (JP)
(74) Representative: Dannenberger, Oliver Andre
(86) International application number: PCT/US2008/003706
(87) International publication number: WO 2008/115562

(56) References cited:
- JP-A- 10 219 107
- US-A1- 2001 018 485
- US-A1- 2003 125 440
- DATABASE WPI Week 198514 Derwent Publications Ltd., London, GB; AN 1985-083289 XP002482898 -& JP 60 032847 A (ASAHI CHEM IND CO LTD) 20 February 1985 (1985-02-20)

## Description

### Field of the Invention

The present invention relates to polyamide compositions having good hydrolysis resistance, salt resistance, toughness, and creep resistance at elevated temperatures.

### Background of the Invention

Glass reinforced polyamide 6,6 compositions have been typically used for the manufacture of components for automotive water cooling systems, such as radiator end tanks, reserve tanks, heater cores, thermal storage tanks, water pumps, water valves, and the like. The applications typically require the use of resins having good hydrolysis resistance, good resistance to stress cracks caused by exposure to road salts, and good toughness. Although reinforced polyamide 6,6 compositions typically have good hydrolysis resistance in such applications, they can be susceptible to stress cracking. Compositions comprising blends of polyamide 6,6 and 6,12 can have improved resistance to stress cracking, and are thus often used in these applications.

However, demands for more fuel efficient automobiles have led to designs in which engine cooling fluids are run at higher temperatures. The increased temperatures can accelerate the rate of degradation by hydrolysis of polyamide cooling system components. Consequently, compositions comprising polyamide 6,6 and polyamide 6,6 and 6,12 blends may in many cases be insufficiently hydrolysis resistant to be used in these applications. Additionally, parts may experience a relatively cold state before engine start-up and prolonged exposure to elevated temperatures during engine operation. Stress resistance and toughness are also required and undesirable deformation (such as creep) of the polymeric material must be avoided.

It would thus be desirable to obtain a polyamide composition having improved hydrolysis resistance, salt resistance, creep resistance, stress resistance and toughness relative to compositions comprising polyamide 6,6 and polyamide 6.6 and 6,12 blends.

### Summary of the Invention

One embodiment of the invention is a polyamide composition, comprising;
(a) about 48.9 to about 79.988 weight percent of poly(hexamethylene sebacamide);
(b) 20 to 50 weight percent of glass fibers;
(c) 0.002 to 0.1 weight percent of copper; and
(d) 0.01 to 1.5 weight percent of at least one nucleating agent, wherein the composition has a relative viscosity as measured in 98 percent sulfuric acid at 25°C according to JIS K6920 of 2.4 to 3.0, and wherein the composition has a half crystallization point of 5 minutes or less and wherein the weight percentages are based on the total weight of the composition. The half crystallization point is measured by DSC-ISO thermal test conditioned at 20C/min. heating rate to a temperature 40 °C above the melting point of the polymer and then cooled at 100 °C/min. to a temperature that is 20 °C below the melting point.

### Detailed Description of the Invention

The compositions of the present invention comprise (a) about 48.9 to about 79.988 weight percent poly(hexamethylene sebacamide) (polyamide 6,10).
The glass fiber (b) of the compositions of the present invention is present in 20 to 50 weight percent. The glass fiber diameter is preferably about 5 to 15 micron. Preferably the glass fiber content in the compositions of the invention is 25 to 40 wt%

The copper (c) of the compositions of the present invention is present in 0.002 to 0.1 wt %; preferably 0.005 to 0.032 wt %. The copper in this invention is in the form of materials selected from the group consisting of Cu(I), Cu(II), or a mixture thereof. Copper(I) salts are preferred. In an embodiment the copper species is selected from the group consisting of copper iodide, copper bromide, copper chloride, copper fluoride; copper thiocyanate, copper nitrate, copper acetate, copper naphthenate, copper caprate, copper laurate, copper stearate, copper acetylacetonate, and copper oxide. In another embodiment the copper species is a copper halide selected from copper iodide, copper bromide, copper chloride, and copper fluoride. A preferred copper species is copper iodide, and preferably copper (I) iodide. Another embodiment is a composition, as disclosed above, additionally comprising about 0.01 to about 5.0 wt % of an metal halide salt selected from Lil, Nal, Kl, Mgl₂, KBr, and Cal₂. In another embodiment the metal halide is Kl or KBr.

The nucleating agent (d) of the compositions of the present invention is present in 0.01 to 1.5 wt %; preferably 0.1 to 1.0 wt %. Nucleating agents useful in the invention are selected from carbon black; inorganic materials such as talc, kaoline, boron nitride, silica, and alumina; and organic materials such as organic phosphite compounds, for instance, phenyl phosphinic acid or its metal salts, and polyamide oligomers. They can be used individually or as mixtures of above materials. Preferred nucleating agent is carbon black, talc or combination of carbon black and other known in the art, especially talc. Talc is very effective in nucleating and accelerating the crystallization of the composition of the present invention. Preferably the carbon black has an average diameter of 10 nanometers to 100 nanometers, as measured by ASTM D-3849. Preferably talc has an average diameter from 1 micron to 10 micron as measured by laser light diffraction.

These nucleating agents are useful in controlling crystallization of the composition to attain shorter injection-molding cycles while maintaining the desired property balance; that are preferred because of cost efficiency for production of molding articles.

Weight percentages are based on the total weight of the composition. The composition has a relative viscosity as measured in 98 percent sulfuric acid according to JIS K6920 of between 2.4 and 3.0, inclusive.

The composition has a half crystallization point of 5 minutes or less.

So long as they do not affect the preferred performances of the ingredients (a) - (d) above, other ingredients may be present in the compositions of the invention.. The other ingredients are lubricants, plasticizer, anti oxidants, UV stabilizers, impact modifiers, inorganic filler, and fiberform reinforcement agent other than glass fiber. Lubricant is a preferable ingredient promoting faster cycle also. Typical lubricants are fatty acid metal salts, fatty acids, fatty acid esters, fatty acid ethers, glycerin esters, organic mono or bis amides, and oxidized or non-oxidized polyethylene wax, or their mixture.

The compositions of the present invention are melt-mixed blends. Any melt-blending method may be used to prepare the compositions. For example, the polymeric components and non-polymeric ingredients may be added to a melt mixer, such as, for example, a single or twin-screw extruder; a blender; a kneader; or a Banbury mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients being subsequently added and further melt-mixed until a well-mixed composition is obtained.

The compositions of the present invention may be formed into articles using methods known to those skilled in the art, such as, for example, injection molding, injection blow molding, blow molding, extrusion, thermoforming, melt casting, rotational molding, and the like.

Preferred articles include automotive water cooling system components such as radiator end tanks, reserve tanks, heater cores, thermal storage tanks, water pumps, water valves, and the like.

### Examples

### Sample preparation:

The compositions of the examples (referred to by "Ex" in the tables) and comparative examples (referred to by "C Ex" in the tables) were prepared by melt compounding the ingredients shown in Table 1 in a twin-screw extruder. Copper was added in the form of Cul. The amounts given in the Table correspond to the actual weight of the copper present. Polyamides 6,10 having five different relative viscosities (referred to as PA 6,10 A-E in Table 1) were used in Examples 1-14 and Comparative Examples 1-7. The relative viscosities as follows:
Polyamide 6,10 A: 2.9
Polyamide 6,10 B: 2.8
Polyamide 6,10 C: 2.6
Polyamide 6,10 D: 2.5
Polyamide 6,10 E: 2.3
Polyamide 6,6 (PA 6,6) was used in Comparative Examples 4 and 5 and a polyamide 6,6 and polyamide 6,12 blend (PA 6,6/6, 12) was used in Comparative Example 6.
The compounded samples compositions were tested as follows:

### Testing methods:

Relative viscosity: Measured according to JIS K6920 in 98% sulfuric acid at 25 °C.

Notched Charpy Impact Strength: Measured based on ISO 179.

Immersion testing - Tensile strength: Samples are injection molded into plaques having dimensions of 120 x 140 x 2.5 mm and then machined from the center of the plaque against the direction in which the glass fibers are oriented into the shape of ASTM 1 tensile bars. The bars are immersed in a 50/50 volume/volume mixture of water and Toyota genuine LLC at 130 °C for 888 or 1800 hours. The tensile strength (TS) of the bars is measured and the results are given in Table 2.

Immersion testing - Strain resistance: Samples are injection molded into plaques having dimensions of 120 x 140 x 2.5 mm and then machined center of the plaque against the direction in which the glass fibers are oriented into plaques having dimensions of 120 x 40 x 2.5 mm. The bars are immersed in a 50/50 volume/volume mixture of water and Toyota genuine LLC at 130 °C for 888 or 1800 hours. The strain resistance is measured by bending the plaques on a curved jug and measuring the percent strain at which cracks were generated and the results are given in Table 2. Higher percentages indicate greater strain resistance.

Air oven aging (AOA) testing: Samples are injection molded into plaques having dimensions of 120 x 140 x 2.5 mm and then machined center of the plaque against the direction in which the glass fibers are oriented into the shape of ASTM 1 tensile bars. The bars are aged in a dry over at 160 °C for 1000 hours and the tensile strength is subsequently measured. The results are given in Table 2.

Calcium chloride resistance testing: Samples are injection molded into plaques having dimensions of 120 x 140 x 2.5 mm and then machined center of the plaque against the direction in which the glass fibers are oriented into plaques having dimensions of 120 x 12.7 x 2.5 mm. The bars are exposed to a 50 percent relative humidity environment until their moisture content has equilibrated. Each specimen is hung vertically in contact with gauze under a 20 MPa load. The gauze is saturated with a 35 percent solution of calcium chloride at room temperature and the sample is allowed to stand in contact with the gauze and solution for one hour. The specimen is placed in an oven at 100 °C for two hours and then cooled to room temperature for one hour. The cycle is repeated until cracks were observed on the surface of the specimen.

Crystallization point 1: Samples are heated at 20 °C/minute to a temperature 40 °C above the melting point of the polymer and then cooled at 100 °C/minute to a temperature that is 20 °C below the melting point. The results are given in Table 1 and 2.

Crystallization point 2 : Samples are heated at 20 °C/minute to a temperature 40 °C above the melting point of the polymer and then cooled at 100 °C/minute to a temperature that is 10 °C below the melting point. The results are given in Table 2.

The advantage in nucleating and accelerating the crystallization of the composition of the present invention by using a combination of carbon black and talc instead of carbon black alone is shown: compare, for example, examples 4, comparative example 4 and 7, and examples 12 - 14.

Compositions meeting the relative viscosity requirements of the invention exhibit significant improvements in physical properties over those having relative viscosities outside the stated range. For instance, comparative Ex 3 has a relative viscosity of 2.3, and shows unexpectedly poor strain resistance.

**Table 1**

| | | | | | | | | | | |
|---|---|---|---|---|---|---|---|---|---|---|
| Polyamide Compositions with Carbon Black and Talc Nucleation | | | | | | | | | | |

| **Materials** | Ex 1 | C Ex 1 | C Ex 2 | Ex 2 | Ex 3 | Ex 4 | Ex 5 | Ex 6 | Ex 7 | Ex 8 |
|---|---|---|---|---|---|---|---|---|---|---|
| PA 6,10 | A | A | A | A | A | A | A | A | B | C |
| PA 6,6 | | | | | | | | | | |
| PA 6,6/6,12 | | | | | | | | | | |
| Glass fibers | 25 | 33 | 33 | 33 | 33 | 33 | 33 | 40 | 33 | 33 |
| Carbon black | 0.25 | 0 | 0.25 | 0.25 | 0.25 | 0.25 | 0.25 | 0.25 | 0.25 | 0.25 |
| Talc | 0 | 0 | 0 | 0 | 0 | 0 | 0 | 0 | 0 | 0 |
| Copper | 0.01 | 0.01 | 0 | 0.005 | 0.008 | 0.01 | 0.032 | 0.01 | 0.01 | 0.01 |
| **Properties** | | | | | | | | | | |
| N-Charpy (kJ/m2) | 12.3 | 15.1 | | 14.8 | | 14.6 | 14.3 | 18.2 | 14.3 | 13.6 |
| Immersion TS (MPa) | | | | | | | | | | |
| 888 h | 47 | 50 | 47 | 48 | 49 | 48 | 48 | 49 | 45 | 43 |
| 1800 h | 24 | 35 | 24 | 25 | 27 | 26 | 26 | 27 | 25 | 25 |
| Strain resistance (%) | | | | | | | | | | |
| 888 h | 2.3 | 2.6 | 2.2 | 2.4 | 2.3 | 2.4 | 1.9 | 1.8 | 1.7 | 1.3 |
| 1800 h | 0.5 | 0.8 | 0.5 | 0.5 | 0.5 | 0.5 | 0.5 | 0.5 | 0.5 | 0.5 |
| AOA TS % retention | | | 52 | 82 | 83 | 83 | 84 | | | |
| Calcium chloride resistance (cycles) | > 200 | | | | | > 200 | | > 200 | | |
| Crystallization point (min) | | > 5 min | | | | 3.6 | | | | |

| | | | | | | | | | | |
|---|---|---|---|---|---|---|---|---|---|---|
| Ingredient quantities are given in weight percent based on the total weight of the composition; wherein the polyamide makes up the remainder to give 100 weight %. | | | | | | | | | | |

Crystallization point was measured for representative examples, such as Ex.4, Ex.10, Ex.11 and C.Ex.1 for carbon black case.

**Table 2**

| Polyamide Compositions with Carbon Black and Talc Nucleation | | | | | | | | | | | |
|---|---|---|---|---|---|---|---|---|---|---|---|
| **Materials** | Ex 9 | C Ex 3 | C Ex 4 | C Ex 5 | C Ex 6 | Ex 10 | Ex 11 | Ex 12 | Ex 13 | Ex 14 | C Ex 7 |
| PA 6,10 | D | E | | | | A | A | A | A | C | A |
| PA 6,6 | | | Y | Y | | | | | | | |
| PA 6,6/6,12 | | | | | Y | | | | | | |
| Glass fibers | 33 | 33 | 25 | 33 | 33 | 33 | 33 | 33 | 33 | 33 | 33 |
| Carbon black | 0.25 | 0.25 | 0.02 | 0 | 0 | 0.01 | 1.00 | 0.25 | 0.25 | 0.25 | 0.25 |
| Talc | 0 | 0 | 0 | 0 | 0 | 0 | 0 | 0.6 | 1.2 | 0.6 | 2 |
| Copper | 0.01 | 0.01 | 0.01 | 0.01 | 0 | 0.01 | 0.01 | 0.01 | 0.01 | 0.01 | 0.01 |
| **Properties** | | | | | | | | | | | |
| N-Charpy (kJ/m2) | 13.2 | 12.1 | 8.7 | 10.5 | 11.4 | 14.8 | 12.7 | 12.8 | 12.5 | 12.7 | 11.4 |
| Immersion TS (MPa) | | | | | | | | | | | |
| 888 h | 40 | 40 | 15 | 14 | 19 | 49 | 46 | 46 | 48 | 46 | 46 |
| 1800 h | 25 | 22 | 6 | 6 | 14 | 29 | 27 | 27 | 29 | 29 | 28 |
| Strain resistance (%) | | | | | | | | | | | |
| 888 h | 1.0 | 0.85 | 0.37 | 0.35 | 0.35 | 2.5 | 2.0 | 2.6 | 2.3 | 2.3 | 2.1 |
| 1800 h | 0.4 | 0.25 | | | | 0.6 | 0.4 | 0.5 | 0.5 | 0.4 | 0.4 |
| AOA TS % retention | | | 82 | 80 | 48 | | | | | | |
| CaCl₂ resistance (cycles) | > 200 | | 7 | 6 | 97 | | >200 | | > 200 | > 200 | |
| Crystallization point 1(min) | | | 2.0 | | | 4.3 | 2.6 | | | | |
| point 2(min) | | | | | | | | 3.6 | 3.1 | 3.1 | 3.2 |

| | | | | | | | | | | | |
|---|---|---|---|---|---|---|---|---|---|---|---|
| Ingredient quantities are given in weight percent based on the total weight of the composition; wherein the polyamide makes up the remainder to give 100 weight %. | | | | | | | | | | | |

## Claims

1. A polyamide composition, comprising;
(a) about 48.9 to about 79.988 weight percent of poly(hexamethylene sebacamide);
(b) 20 to 50 weight percent of glass fibers;
(c) 0.002 to 0.1 weight percent of copper; and
(d) 0.01 to 1.5 weight percent of at least one nucleating agent,
wherein the composition has a relative viscosity as measured in 98 percent sulfuric acid at 25°C according to JIS K6920 of 2.4 to 3.0, and wherein the composition has a half crystallization point measured by DSC-150 thermal test conditioned at 20°C/min. heating rate to a temperature of 40°C above the melting point of the polymer and then cooled at 100°C/min, to a temperature that is 20°C below the melting point of 5 minutes or less and wherein the weight percentages are based on the total weight of the composition.

2. The composition of claim 1, wherein the nucleating agent is carbon black.

3. The composition of claim 1, wherein the nucleating agent is talc or combination of carbon black and talc.

4. The composition of claim 1, wherein the copper is in the form of a copper(I) salt and/or copper(II) salt.

## Patentansprüche

1. Polyamidzusammcnsctzung umfassend:
(a) etwa 48,9 bis etwa 79,988 Gewichtsprozent Poly(hexamethylensebacamid);
(b) 20 bis 50 Gewichtsprozent Glasfasern;
(c) 0,002 bis 0,1 Gewichtsprozent Kupfer; und
(d) 0,01 bis 1,5 Gewichtsprozent mindestens eines Keimbildners,
wobei die Zusammensetzung eine relative Viskosität, wie in 98 prozentiger Schwefelsäure bei 25 °C JIS K6920 gemäß gemessen, von 2,4 bis 3,0 aufweist und wobei die Zusammensetzung einen Halbkristallisationspunkt, durch den DSC-150-Wärmetest, mit einer Erhitzungsrate von 20 °C/min auf eine Temperatur von 40 °C über dem Schmelzpunkt des Polymers konditioniert und dann mit 100 °C/min auf eine Temperatur abgekühlt, die 20 °C unterhalb des Schmelzpunkts liegt, gemessen, von 5 Minuten oder weniger aufweist und wobei die Gewichtsprozentsätze auf dem Gesamtgewicht der Zusammensetzung basieren.

2. Zusammensetzung nach Anspruch 1, wobei der Keimbildner Ruß ist.

3. Zusammensetzung nach Anspruch 1, wobei der Keimbildner Talk oder eine Kombination von Ruß und Talk ist.

4. Zusammensetzung nach Anspruch 1, wobei das Kupfer in Form eines Kupfer(I)salzes und/oder Kupfer(II)salzes vorliegt.

## Revendications

1. Composition de polyamide, comprenant:
(a) d'environ 48,9 à environ 79,988 pour-cent en poids de poly(hexaméthylène sébacamide);
(b) de 20 à 50 pour-cent en poids de fibres de verre;
(c) de 0,002 à 0,1 pour-cent en poids de cuivre; et
(d) de 0,01 à 1,5 pour-cent en poids d'au moins un agent de nucléation,
où la composition possède une viscosité relative telle que mesurée dans 98 pour-cent d'acide sulfurique à 25°C selon la spécification JIS K6920 de 2,4 à 3,0, et où la composition possède un point de demi-cristallisation, mesuré par un essai thermique DSC-150 conditionné à une vitesse de chauffe de 20°C/min jusqu'à une température de 40°C au-dessus du point de fusion du polymère et ensuite refroidi à 100°C/min, jusqu'à une température qui est 20°C en dessous du point de fusion, de 5 minutes ou moins et où les pourcentages en poids sont basés sur le poids total de la composition.

2. Composition selon la revendication 1, dans laquelle l'agent de nucléation est un noir de carbone.

3. Composition selon la revendication 1, dans laquelle l'agent de nucléation est un talc ou une combinaison de noir de carbone ou de talc.

4. Composition selon la revendication 1, dans laquelle le cuivre est sous la forme d'un sel de cuivre(I) et/ou d'un sel de cuivre(II).
